# EUROPÄISCHE PATENTSCHRIFT

(11) **EP 1 262 230 B1**
(45) Veröffentlichungstag und Bekanntmachung des Hinweises auf die Patenterteilung: **22.11.2006**
(21) Anmeldenummer: 02012084.6
(22) Anmeldetag: 31.05.2002
(51) Int. Cl.: B01J 19/00, B81B 1/00, B01J 8/44

(54) **Lochplatte und Verfahren zu ihrer Herstellung**
Nozzle plate and method for producing the same
Plaque à orifices et procédé permettant de les produire

(30) Priorität: 01.06.2001 DE 10127022
(43) Veröffentlichungstag der Anmeldung: 04.12.2002
(73) Patentinhaber: P21-Power for the 21st Century GmbH, 85649 Brunnthal/München (DE)
(72) Erfinder: Huber, Alexander, 80805 München (DE); Schreiber, Jörg, 81735 München (DE)
(74) Vertreter: Müller, Thomas

(56) Entgegenhaltungen:
- DE-A- 4 324 456
- DE-A1- 3 522 095
- DE-U- 20 022 875
- FR-A- 2 645 046
- US-A- 5 839 207

## Beschreibung

Die Erfindung betrifft eine Lochplatte, beispielsweise eine Lochplatte für den Aufbau chemisch/physikalischer Reaktoren, und ein Verfahren zu ihrer Herstellung.

Durchflußreaktoren werden in verschiedenen Bereichen von Technik und Forschung eingesetzt. Reaktoren werden im Gebiet der Chemie und der Biotechnologie zur gezielten Durchführung von Reaktionen eingesetzt, aber ebenfalls in physikalischen Anwendungen wie Zustandswechseln (z.B. zum Verdampfen oder Kondensieren, oder zum Mischen von Fluiden) und dergleichen. Es gibt sie in verschiedenen Bauformen und Anwendungen. Eine häufig verwendete Bauform besteht aus einer Reihe von Schichten, in denen jeweils eine Mehrzahl von Kanälen angeordnet sind, welche von den zu bearbeitenden Substanzen durchflossen werden. Die Schichten bilden dabei einen Schichtenstapel. Auf diese Weise erhält man einen Durchflußreaktor, bei dem Substanzen in die Kanäle eingeleitet werden, in den Kanälen bearbeitet werden und am Ende der Kanäle in bearbeitetem Zustand entnommen werden können. Häufig werden derartige Reaktoren in Mikrostrukturtechnik hergestellt, das heißt unter Verwendung von Techniken, die aus der Halbleiterherstellung adaptiert worden sind und die der Ausbildung der Reaktorstrukturen wie beispielsweise der Kanäle dienen. Auf diese Weise lassen sich einfacher sog. Mikroreaktoren herstellen, die bei besonders kleinen Abmessungen die Bearbeitung kleiner Substanzmengen ermöglichen.

In einer speziellen Bauform von Durchflußreaktoren werden die Kanäle benachbarter Schichten miteinander durch Öffnungen verbunden. Diese Bauart dient verschiedenen Einsatzgebieten. So ist es durch die Öffnungen möglich, Substanzen, die über verschiedene Schichten dem Reaktor zugeführt werden, im Reaktor miteinander zu mischen, um eine Reaktion zu erreichen. Auch können die Öffnungen dazu dienen, Fluide in verschiedenen Phasenzuständen voneinander zu trennen, oder bei Verstopfen von Kanälen Umleitungsmöglichkeiten in Kanäle benachbarter Schichten zu erhalten.

So ist aus der DE 35 22 09 A1 eine Vorrichtung zum Behandeln strömender Medien bekannt. Die dort offenbarte Vorrichtung weist eine Vielzahl von Einzelelementen auf, die jeweils eine Grundplatte mit zumindest auf einer Grundplattenseite angeordnete Rippen aufweist. Ferner ist aus der DE 35 22 09 A1 bekannt, dass die Grundplatte und/oder die auf der Grundplattenseite angeordneten Rippen fensterartige Durchbrüche oder Aussparungen aufweisen können.

Im allgemeinen Stand der Technik sind solche Schichten mit Kanälen bekannt, in denen Löcher in den Kanälen angeordnet sind. Diese werden beispielsweise durch Herausätzen oder durch Bohren hergestellt. Allerdings haben diese Öffnungen den Nachteil, daß sie verhältnismäßig groß sind und damit keine feine Vermischung von Substanzen erlauben, und eine strukturelle Schwächung der Schichten mit sich bringen ("Sollbruchstellen"). Die Herstellung kleinerer Löcher, beispielsweise im Bereich unter 100 Mikrometer, ist mittels Ätz- oder Bohrtechniken praktisch nicht möglich. Die Herstellung kleinerer Löcher kann derzeit nur mittels Laserbohrungen erreicht werden, welche in die Kanalbereiche der Schichten gesetzt werden.

Solche Laserbohrungen sind jedoch sehr aufwendig, da jedes Loch einzeln hergestellt werden muß, was zu einer deutlichen Verteuerung der Reaktoren führt. Der Erfindung liegt daher die Aufgabe zugrunde, Lochplatten für Reaktoren bereitzustellen, die kleinste Löcher in kostengünstiger Weise und ohne strukturelle Einbussen bereitstellen können.

Diese Aufgabe wird erfindungsgemäß gelöst durch die Bereitstellung einer Lochplatte gemäß dem unabhängigen Patentanspruch 1, eines Reaktors mit solchen Lochplatten gemäß dem unabhängigen Patentanspruch 14 und eines Verfahrens zur Herstellung von Lochplatten gemäß dem unabhängigen Patentanspruch 16. Weitere vorteilhafte Ausgestaltungen, Aspekte und Details der vorliegenden Erfindung ergeben sich aus den abhängigen Patentansprüchen, der Beschreibung und den beigefügten Zeichnungen. Merkmale und Details, die im Zusammenhang mit der erfindungsgemäßen Lochplatte beschrieben sind, gelten dabei selbstverständlich auch für das erfindungsgemäße Verfahren, und umgekehrt. Analoges gilt auch für den erfindungsgemäßen Reaktor.

Gemäß dem ersten Aspekt der Erfindung wird eine Lochplatte bereitgestellt, aufweisend einen Plattenbereich, zumindest eine auf einer ersten Hauptoberfläche des Plattenbereichs angeordnete Rippe und wenigstens einen Übergangsbereich zwischen Rippe und erster Hauptoberfläche, wobei wenigstens ein von einer zweiten Hauptoberfläche des Plattenbereichs ausgehendes Loch vorgesehen ist,. Die Lochplatte ist erfindungsgemäß dadurch gekennzeichnet, daß das Loch mit mehr als 20% seiner Querschnittsfläche gegenüber der zumindest einen Rippe und/oder gegenüber zumindest einem Übergangsbereich angeordnet ist und daß das Loch derart ausgebildet ist, daß zumindest eine Durchbruchöffnung in wenigstens einem Übergangsbereich ausgebildet ist.

Die erfindungsgemäße Lochplatte weist den Vorteil auf, daß die Löcher zumindest zum Großteil im Bereich der Rippen(n) und/oder des/der Übergangsbereich(e) ausgebildet sind, und sich nicht, wie beim Stand der Technik, im Bereich der eigentlichen Kanäle befinden. Dadurch ist zunächst eine gute Stabilität gewährleistet. Weiterhin können die Löcher auf einfache und kostengünstige Weise hergestellt werden. So ist es beispielsweise möglich, daß die Löcher mit einem relativ großen Querschnitt hergestellt werden. Dennoch sind Durchbruchsöffnungen mit nur geringem Querschnitt realisierbar. Dies kann beispielsweise dadurch erreicht werden, daß Löcher mit einer bestimmten Tiefe eingebracht werden. Ebenso ist es denkbar, daß die Löcher zwar durchgängig in die Lochplatte eingebracht werden. In diesem Fall kann durch geschickte Anordnung der Löcher unterhalb der Rippe und/oder dem Übergangsbereich sichergestellt werden, daß sich nur ein kleiner Flächenbereich der Löcher im Übergangsbereich befindet. Wenn die Lochplatte mit einer darüberliegenden Platte verbunden wird (wie dies beispielsweise bezüglich des weiter unten offenbarten Reaktors beschrieben ist) ist der Vorteil der Verkleinerung der Öffnung ebenfalls gegeben, da die Oberseite der durchbohrten Rippe durch die darüberliegende Platte abgedeckt wird. Dieser besagte Flächenbereich stellt dann eine entsprechende Durchbruchsöffnung dar.

Nicht ausschließliche Beispiele hierzu werden im weiteren Verlauf der Beschreibung näher erläutert.

Die Erfindung ist nicht auf eine bestimmte Anzahl von Löchern beschränkt. Grundsätzlich ist ausreichend, wenn ein einziges Loch vorgesehen ist. Natürlich kann die Lochplatte auch zwei oder mehr Löcher aufweisen. Die jeweils geeignete Anzahl an Löchern ergibt sich je nach Bedarf und Anwendungsfall.

Erfindungsgemäß sollen mindestens 20% der Loch-Querschnittsfläche gegenüber zumindest einer Rippe und/oder gegenüber zumindest einem Übergangsbereich angeordnet sein. Vorteilhaft kann der prozentuale Anteil auch bei mehr als 20% liegen, beispielsweise bei mehr als 30%, mehr als 40%, mehr als 60% oder mehr als 80%. Natürlich ist auch denkbar, daß der prozentuale Anteil 100% beträgt. Letzteres kann insbesondere bei Rippen mit einem breiten Übergangsbereich sinnvoll sein (wie dies beispielsweise in der Figurenbeschreibung dargestellt ist). Bei rechteckigen Rippen hingegen kann auch ein deutlich kleinerer Anteil sinnvoll sein.

Bei dem Übergangsbereich kann es sich vorteilhaft um eine Seitenwand, zumindest aber um einen Teilbereich einer Seitenwand der Rippe handeln.

Der Plattenbereich ist hierbei der Hauptteil der Platte, auf dem sich die Rippe(n) befinden und der zwei Hauptoberflächen, d.h. die beiden größten Oberflächen der Platte, aufweist. Auf der ersten Hauptoberfläche befinden sich die aus dem Stand der Technik bekannten Rippen, auf der gegenüber gelegenen zweiten Hauptoberfläche sind die Tröge angeordnet.

Die Erfindung ist nicht auf eine bestimmte Gestaltung der Löcher beschränkt. Nachfolgend werden einige vorteilhafte Ausführungsbeispiele beschrieben, ohne daß die Erfindung auf die genannten Beispiele beschränkt wäre.

Beispielsweise ist es denkbar, daß das wenigstens eine Loch als Trog ausgebildet ist, dessen Tiefe geringer ist als die Gesamtdicke des Plattenbereichs und der Rippe.

In einem solchen Fall sind anstelle von direkt hergestellten Löchern im Hauptteil der Platte unterhalb der Rippen Vertiefungen (Tröge) vorgesehen, die gerade so tief sind, daß es einen Schnittbereich zwischen dem Umfang der Vorderkante (dem Boden) der Tröge und dem Bereich zwischen Rippe und Hauptteil gibt, an dem das Material der Platte vollständig abgetragen ist, so daß wenigstens eine Durchbruchsöffnung entsteht.

Ein Trog im Sinne der vorliegenden Erfindung ist eine Vertiefung, die sich von der zweiten Hauptoberfläche in das Material des Plattenbereichs hinein erstreckt. Der Trog weist ein offenes Ende an der zweiten Hauptoberfläche und ein Vorderende auf, wobei das Vorderende bis auf die wenigstens eine Durchbruchöffnung im wesentlichen geschlossen ist.

Ein Grundgedanke liegt darin, zumindest einen Trog so anzuordnen und von seiner Tiefe her so zu bemessen, daß es bei seiner Herstellung zu einem Durchbruch auf die andere Seite der Platte kommt. Der Trog muß daher jedenfalls genauso tief oder tiefer sein als der Plattenbereich zwischen zwei benachbarten Rippen dick ist, um auf der anderen Seite eine Öffnung bilden zu können. Der Durchbruch liegt dabei im Übergangsbereich zwischen Hauptoberfläche und Rippe. Die Größe der jeweiligen Durchbruchsöffnungen wird bestimmt durch die Tiefe des Trogs (bezüglich seines Eindringens in die Rippe), seine Abmessungen in Querrichtungen (Durchmesser beziehungsweise Umfang, oder Länge/Breite), und der Breite der Rippe im Schnittbereich mit dem Trog.

Die dadurch erzielbaren Öffnungen zwischen den beiden Hauptoberflächen weisen eine freie Fläche auf, die meist wesentlich kleiner ist als die Fläche des Trogs bei Sicht von der Hauptoberfläche. Auf diese Weise können in einfacher Weise sehr kleine Löcher erzeugt werden, ohne daß hierzu entsprechend komplexe und aufwendige Instrumente oder Verfahren notwendig würden, die bislang zur Erzeugung derart kleiner Löcher verwendet worden sind.

Jeder Trog weist erfindungsgemäß zumindest eine Durchbruchsöffnung auf. Eine einzelne Durchbruchsöffnung läßt sich beispielsweise erreichen, indem der Mittelpunkt des Trogs seitlich versetzt zur Mitte der Rippe angeordnet wird, so daß es lediglich auf der Seite der Rippe, zu der hin der Trog versetzt worden ist, eine Durchbruchsöffnung entsteht.

In einer anderen Ausgestaltung werden die Tröge mittig unter den Rippen plaziert, so daß auf beiden Seitenwänden, jeweils im Übergangsbereich, der zumindest einen Rippe Durchbruchsöffnungen vorhanden sind.

Gemäß einer anderen Ausgestaltungsvariante kann das Loch als durchgehende Öffnung ausgebildet sein, die sich durch den Plattenbereich sowie wenigstens einen Teilbereich der Rippe hindurch erstreckt.

In weiterer Ausgestaltung ist denkbar, daß sich die durchgehende Öffnung weiterhin auch durch wenigstens einen Teilbereich von zumindest einer Seitenwand der Rippe hindurch erstreckt. Natürlich ist auch denkbar, daß sich die Öffnung durch wenigstens einen Teilbereich von beiden Seitenwänden der Rippe hindurch erstreckt. Die Seitenwände stellen in einem solchen Fall zumindest Teile der Übergangsbereiche zwischen Rippe und erster Hauptoberfläche dar.

Der Vorteil einer solchen Ausgestaltungsform liegt unter anderem darin, daß die in der Beschreibungseinleitung erwähnten Sollbruchstellen vermieden werden können. Beim Durchbohren mehrerer Rippen einer Platte ist es hierfür vorteilhaft, wenn nicht mehrere Bohrungen auf einer Gerade liegen und alle die Gerade schneidenden Rippen am Schnittpunkt geschwächt werden.

Solange der Durchmesser des Lochs nicht wesentlich größer ist als die Breite der Rippe ist der Vorteil der Verkleinerung der Durchbruchöffnung ebenfalls gegeben, wenn die Lochplatte etwa mit einer darüberliegenden weiteren Platte verbunden wird und ein Medium, beispielsweise ein Fluid, nur zu den Seiten der Rippe austreten kann. Eine derartige Ausgestaltungsform ist besonders einfach und kostengünstig herstellbar, beispielsweise mittels Bohrung oder dergleichen.

Vorzugsweise kann sich das Loch in einer zum Plattenbereich senkrechten Richtung erstrecken. In weiterer Ausgestaltung ist auch denkbar, daß sich das Loch bezüglich des Plattenbereichs in einem von der Senkrechten abweichenden Winkel erstreckt. So kann die Durchflußmenge durch die Durchbruchöffnungen in der jeweils gewünschten Weise erhöht beziehungsweise erniedrigt werden.

Die Erfindung ist jedoch nicht auf bestimmte Ausgestaltungsvarianten beschränkt, wie die Löcher unter den Rippen und/oder Übergangsbereichen plaziert werden können. Grundsätzlich können die Löcher unter den Rippen und/oder Übergangsbereichen mit beliebigem Verteilungsmuster plaziert werden. Geeignete Verteilungsmuster ergeben sich dabei je nach (verfahrenstechnischer) Anwendung der Lochplatte und(oder des daraus gebildeten Reaktors. Beispielsweise, jedoch nicht ausschließlich, können die Löcher mit einem Rechteckmuster, versetzt, mit variierendem Abstand oder dergleichen verteilt werden oder sein.

Vorzugsweise weist die zumindest eine Rippe einen rechteckigen Querschnitt auf, der von Form und Abmessungen dem Querschnitt bekannter Rippen für Rippenplatten bei Reaktoren entspricht.

Weiter kann der Übergangsbereich von Rippe und erster Hauptoberfläche gerundet sein. Eine solche Formvariante kann sich je nach Herstellung der Rippen, beispielsweise in Mikrostrukturtechnik, aus dem Herstellprozeß ergeben. Diese Variante hat zudem den Vorteil, aufgrund der damit verbundenen Neigung der Durchbruchsöffnungsränder eine kantenfreie Öffnung des Durchbruchs zu bewirken, sofern das Loch so bemessen ist, daß sich der Durchbruch im gerundeten Bereich des Übergangs befindet.

In der Regel wird die erfindungsgemäße Lochplatte nicht nur eine Rippe aufweisen, sondern eine Mehrzahl von auf der ersten Hauptoberfläche des Plattenbereichs angeordneten Rippen, die beispielsweise parallel zueinander angeordnet sein können, wenn die Lochplatte in einem Druchflußreaktor Verwendung finden soll. Die einzelnen Rippen bilden dann entsprechende Kanalwände.

Je nach Ausgestaltung ist es möglich, daß sich die Kontur der Kanäle zwischen den Rippen, etwa die Breite, Querschnittsfläche, Querschnittsform und dergleichen, in Strömungsrichtung eines Mediums durch die Lochplatte verändert, beispielsweise vergrößert oder verkleinert.

Es ergibt sich durch die Anordnung von Rippen und/oder Übergangsbereichen und unter ihnen befindlichen Löchern ein Raster von Durchbruchsöffnungen, die über die gesamte Lochplatte oder einen Bereich der Lochplatte verteilt sind.

Das Loch kann verschiedene Formen annehmen, was seinen Wandumfang anbelangt. So kann es einen kreisförmigen Umfang oder einen viereckigen Umfang aufweisen, aber auch andere, beliebige Formen wie Fünf- oder Sechsecke, Ellipsen oder dergleichen. Die Form des Umfangs des Lochs bestimmt dabei zusammen mit den anderen Elementen die Form der Durchbruchsöffnung. Je nach Anwendungszweck kann es auch sinnvoll sein, Löcher und/oder Rippen und/oder Übergangsbereiche verschiedener Formen auf einer Lochplatte anzuordnen.

Auch der Boden (das Vorderende) des Trogs kann unterschiedlich ausgestaltet sein, beispielsweise flach, kegelförmig oder dergleichen. Es wird insbesondere bevorzugt, daß der zumindest eine Trog einen Boden aufweist, der gegen die Rippe hin aufgewölbt ist. Diese Form kann sich u.a. aus der verwendeten Herstelltechnik des Trogs ergeben.

Mit der erfindungsgemäßen Lochplatte sind in einfacher Weise sehr kleine Öffnungen zwischen den beiden Hauptflächen erzielbar. So kann vorzugsweise der größte Durchmesser (der größte Abstand zwischen allen Punkten auf dem Umfang) der Durchbruchsöffnungen 10 bis 100 Mikrometer betragen, vorzugsweise 15-50, insbesondere 15-30, beispielsweise etwa 20 Mikrometer.

Verschiedene Techniken stehen für die Fertigung von Rippen und Trögen zur Verfügung. So können diese beispielsweise gefräst, gebohrt, gesägt, geätzt, funkenerodiert werden oder dergleichen. Die Erfindung ist nicht auf bestimmte Verfahren zur Fertigung der Rippen und Löcher beschränkt. Es wird, insbesondere zur Erzielung kleinster Strukturen in Mikroreaktoren, bevorzugt, daß die zumindest eine Rippe und das zumindest eine Loch in Mikrostrukturtechnik hergestellt sind.

Vorteilhaft kann auch vorgesehen sein, daß die Oberfläche der Lochplatte zumindest bereichsweise mit einem Katalysatormaterial beschichtet ist oder daß die Lochplatte zumindest teilweise aus einem katalytisch aktiven Werkstoff hergestellt ist. Vorteilhaft ist vorgesehen, daß die Lochplatte zumindest im Bereich von Durchströmkanälen, die von einem entsprechend geeigneten Medium durchströmt werden, katalytisch aktiv ist.

Die Erfindung ist weiterhin gerichtet auf einen Reaktor, aufweisen eine Stapelfolge von zwei oder Platten, wobei wenigstens eine der Platten in Form einer wie vorstehend beschriebenen erfindungsgemäßen Lochplatte ausgebildet ist.

Je nach Bedarf und Anwendungsfall kann die Anzahl der Platten, deren Stapelabfolge sowie die Ausgestaltung der jeweils anderen Platte(n) in für den jeweiligen Einzelfall geeigneter Weise ausgebildet sein. Dem Fachmann sind hier verschiedene Anordnungen der Platten bekannt, die in den Kanälen zwischen den Rippen von Reaktionsmedien durchströmt werden, beispielsweise eine parallele Anordnung der Rippen oder eine orthogonale Anordnung. Dem Fachmann sind neben den eingangs vorgestellten Formen weitere Reaktoren bekannt, die er mit Hilfe der erfindungsgemäßen Lochplatten realisieren kann.

Vorteilhaft können die Lochplatten und insbesondere der gesamte Reaktor in Mikrostrukturtechnik ausgebildet sein. Derartige Reaktoren können auf kleinstem Raum eine große Anzahl von Mikrokanälen aufweisen, deren Breite und Höhe jeweils nur im Bereich weniger Mikrometer liegt. Mikroreaktoren bestehen beispielsweise aus einer Schichtenfolge einzelner Schichten, wobei die einzelnen Schichten jeweils eine Anzahl von Mikrokanälen aufweisen. Die Schichten (Lochplatten) sind üblicherweise so angeordnet, daß die Mikrokanäle jeweils benachbarter Schichten in Kreuzstrombauweise oder in Parallelstrombauweise ausgerichtet sind.

Die Erfindung ist weiterhin auf ein Verfahren zur Herstellung von Lochplatten gerichtet, das folgende Schritte aufweist:
- Bereitstellen einer Platte mit einem Plattenbereich, zumindest einer auf einer ersten Hauptoberfläche des Plattenbereichs angeordneten Rippe und wenigstens einem Übergangsbereich zwischen Rippe und erster Hauptoberfläche; und
- Einbringen wenigstens eines Lochs in die Platte, derart, daß das Loch mit mehr als 20% seiner Querschnittsfläche gegenüber der zumindest einen Rippe und/oder gegenüber zumindest einem Übergangsbereich angeordnet ist, wobei das Loch in einer Weise ausgebildet wird, daß zumindest eine Durchbruchöffnung in wenigstens einem Übergangsbereich ausgebildet wird.

Maßgeblich für das erfindungsgemäße Verfahren ist hierbei das Einbringen der Löcher in das Material der Platte, die zur Lochplatte verarbeitet werden soll.

Das Bereitstellen kann im Bereitstellen einer vorgefertigten Rippenplatte bestehen, so daß keinerlei aktive Arbeitsschritte zur Erzeugung einer solchen Platte vorgenommen werden müssen. Das Bereitstellen kann vorzugsweise jedoch den folgenden Schritt aufweisen:
- Anordnen zumindest einer Rippe auf einer ersten Hauptoberfläche eines Plattenbereich der Platte.

Für dieses Anordnen stehen wiederum verschiedene Möglichkeiten zur Verfügung. So kann das Anordnen der zumindest einen Rippe durch Anordnen eines Rippenelements auf die erste Hauptoberfläche erfolgen, beispielsweise durch Aufkleben oder Aufschweißen. Unter einem Rippenelement ist hierbei ein separates Bauteil zu verstehen, das bei Anbringung an der Platte eine Rippe bildet. Bei der so erzeugten Rippenplatte handelt es sich mithin um eine komposite Platte, die aus mehreren Elementen zusammengesetzt ist.

Das Anordnen der zumindest einen Rippe kann ebenfalls durch Mikrostrukturtechnik erfolgen, wobei dem Fachmann konkrete Verfahren zur Erzielung der Rippenstruktur auf einer Oberfläche bekannt sind.

Das Anordnen der zumindest einen Rippe kann durch Entfernen solcher Bereiche aus einem Plattenwerkstück erfolgen, die nicht zu der zumindest einen Rippe gehören.

Es kann ebenfalls durch Ablagern von Rippensubstanz an vorgegebenen Rippenbereichen auf der ersten Hauptoberfläche des Plattenbereichs erfolgen.

Übliche Techniken wie Fräsen, Schneiden, Ätzen oder dergleichen können hierbei Verwendung finden. Das Abscheiden von Material erfolgt vorzugsweise durch Mikrostrukturtechniken.

Auch das Einbringen des zumindest einen Lochs kann mittels Mikrostrukturtechnik erfolgen, beispielsweise durch Ätzen und/oder Sputtern und/oder Bohren oder dergleichen.

In einer bevorzugten Ausführungsform der vorliegenden Erfindung erfolgt das Anordnen der zumindest einen Rippe und das Einbringen des zumindest einen Lochs im selben Schritt. Diese Ausführungsform erfordert die Verwendung von Mikrostrukturtechniken, beispielsweise dem Herausätzen von zuvor nicht abgedeckten Bereichen der Oberflächen eines Plattenwerkstücks.

Insbesondere kann das erfindungsgemäße Verfahren dadurch gekennzeichnet sein, daß damit eine wie vorstehend beschriebene erfindungsgemäße Lochplatte hergestellt wird oder herstellbar ist.

Die erfindungsgemäße Lochplatte mit kleinen Durchbruchsöffnungen zwischen Löchern und den Rippen weist verschiedene Vorteile gegenüber im Stand der Technik bekannten Lochplatten - insbesondere für Mikroreaktoren - auf. So kann mit relativ "groben" Maßnahmen wie einer Bohrung oder einer Ätztechnik dennoch eine kleine Durchbruchsöffnung erzeugt werden, wenn die Tiefe und/oder Anordnung des Lochs korrekt kontrolliert werden kann. Auch wenn die Lochplatte vollständig durchbohrt wird entsteht letztendlich eine kleine Durchbruchöffnung, sobald die Lochplatte mit einer darüberliegenden, weiteren Platte, vorzugsweise ohne Loch, an dieser Stelle abgedeckt wird. Der in der Regel elliptische Umfang der Durchbruchsöffnung erweist sich für bestimmte Anwendungen ebenfalls als vorteilhaft. Durch die Positionierung der Tröge unterhalb der Rippen kann eine höhere Stabilität der Platte erreicht werden als bei konventionell angebrachten Löchern; es entstehen keine "Sollbruchstellen". Aufgrund der höheren Stabilität ist es auch möglich, dünnere Materialien zur Herstellung der erfindungsgemäßen Lochplatten zu verwenden, als dies im Stand der Technik möglich war.

Die Herstellung der Durchbruchsöffnungen ist mit Hilfe vom Mikrostrukturtechnik in einfacher Weise und mit geringem Zeitaufwand möglich. Durch die kombinierte Herausarbeitung der Rippen und der Tröge in einem Arbeitsschritt kann der Aufwand sogar noch weiter reduziert werden. Diese Maßnahmen tragen mithin auch zu einer Kostensenkung der Plattenherstellung bei.

Insgesamt stellt das in dieser Erfindung vorgestellte Verfahren einen großen Fortschritt für die Herstellung von Lochplatten für entsprechende Reaktoren dar.

Es versteht sich, daß die Lochplatten bezüglich ihrer Verwendung nicht auf Mikroreaktoren eingeschränkt sind, sondern vielmehr auf allen Gebieten der Technik Verwendung finden können, in denen ihr Einsatz sinnvoll erscheint.

Im folgenden soll die Erfindung anhand konkreter Ausführungsbeispiele weiter erläutert werden, wobei auf die beigefügten Zeichnungen Bezug genommen werden wird, in denen folgendes dargestellt ist:
Figur 1 zeigt eine Lochplatte gemäß einer ersten Ausführungsform der vorliegenden Erfindung in einer Ansicht auf die erste Hauptoberfläche;
Figur 2 zeigt eine Lochplatte in einer ähnlichen Ausführungsform der Erfindung wie in Figur 1 in einer Ansicht auf die zweite Hauptoberfläche;
Figur 3 zeigt verschiedene Ausgestaltungen von Rippe und Trog und die daraus resultierenden Durchbruchsöffnungen;
Figuren 4 und 5 zeigen einen Reaktor mit einer Lochplatte gemäß einer weiteren Ausführungsform; und
Figuren 6 und 7 zeigen einen Reaktor mit einer Lochplatte gemäß noch einer weiteren Ausführungsform.

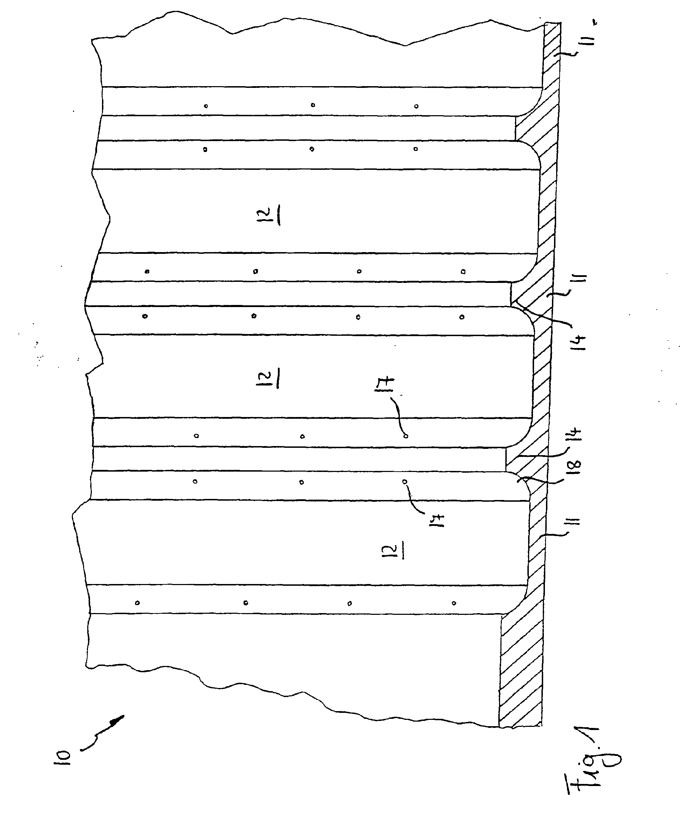

Die in Figur 1 gezeigte Lochplatte 10 gemäß der Erfindung kann beispielsweise mit aus der Halbleitertechnik bekannten Techniken hergestellt worden sein. Sie weist zwei Hauptoberflächen auf, die im wesentlichen den eigentlichen Plattenbereich 11 definieren. Auf Hauptoberfläche 12 ist beispielsweise so viel Material weggeätzt worden, daß Rippen 14 mit gerundeten Übergangsbereichen 18 zur Hauptoberfläche 12 zurückgeblieben sind.

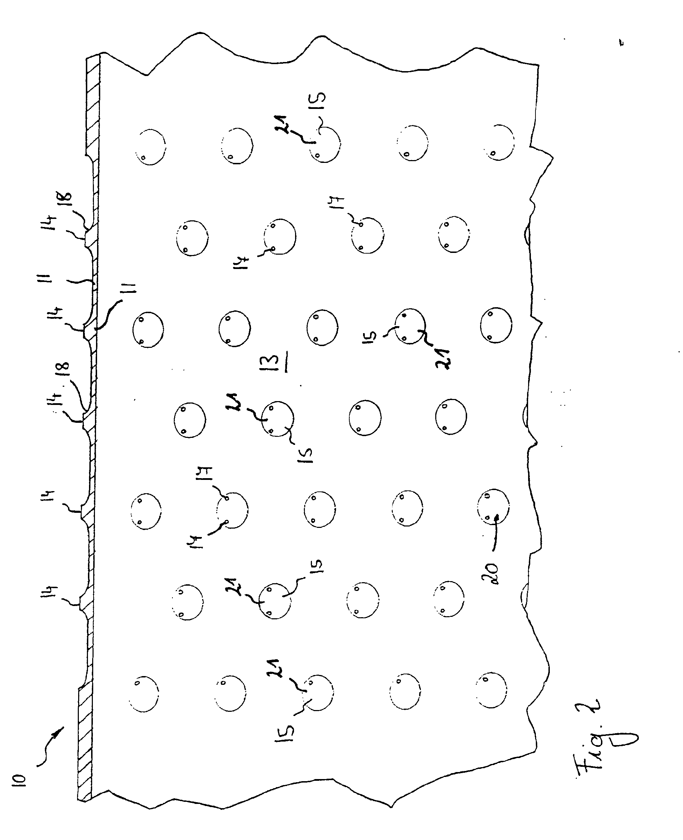

Auf der gegenüberliegenden Seite (vergleiche Figur 2) der Platte 10, das heißt auf Hauptoberfläche 13, sind gegenüber den Rippen 14 Löcher 15 in das Plattenmaterial eingesenkt, beispielsweise geätzt, worden. Die Löcher 15 sind als Tröge 21 ausgebildet. Die Tröge 21 reichen so tief, daß sie auf der anderen Hauptoberfläche 12 durchbrechen und damit Durchbruchsöffnungen 17 bilden, welche Verbindungen für Fluide zwischen den beiden Hauptoberflächen 12, 13 bilden. Wie aus den Figuren ersichtlich, führt diese spezifische, erfindungsgemäße Anordnung von Rippen und Trögen dazu, daß trotz vergleichsweise großer Lochöffnungen 20 die eigentlichen Durchbruchsöffnungen 17 sehr klein sein können.

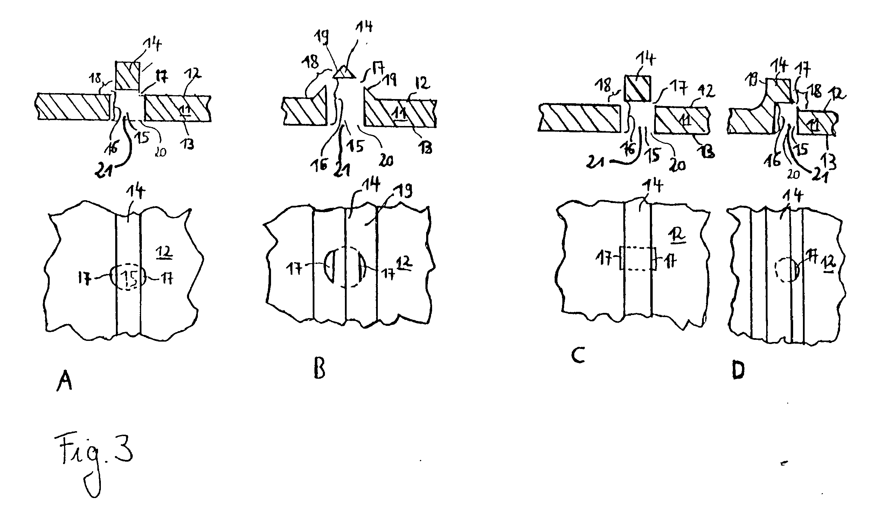

Figur 3 zeigt verschiedene Ausgestaltungen von Rippen und Trögen als Beispiele für die Erfindung.

In Figur 3A liegt ein Loch 15 in Form eines kreisförmigen Trog 21 in der Mitte unter einer rechteckigen Rippe 14. Der Durchmesser des Trogs 21 ist so bemessen, daß er die Rippe 14 seitlich überragt, während seine Tiefe, beziehungsweise die Tiefe 16 des Lochs so bemessen ist, daß er bis in die Rippe 14 hineinreicht. Es bilden sich Durchbruchsöffnungen 17 im Übergangsbereich 18 zwischen Rippe 14 und erster Hauptoberfläche 12. Der obere Teil der Abbildung zeigt jeweils einen Querschnitt durch den Trog 21 und das ihn umgebende Plattenmaterial, während der untere Teil jeweils eine Aufsicht von der Rippe 14 aus zeigt.

Figur 3B zeigt eine Ausführungsform mit einer Rippe 14, die einen dreieckigen Querschnitt aufweist. Der Trog 21 hat hier einen kleineren Durchmesser als die Rippe 14, weist jedoch eine Tiefe 16 auf, bei der in der Flanke 19, wiederum im Übergangsbereich 18 (der hier als der Flankenbereich außer der oberen Spitze der Rippe 14 definiert werden muß), die Durchbruchsöffnungen 17 entstanden sind.

Figur. 3C zeigt eine weitere Ausführungsform der Erfindung, in der der Trog 21 bei Aufsicht auf die Hauptoberfläche 13 einen rechteckigen, beispielsweise einen quadratischen Umfang aufweist. Im übrigen entspricht diese Ausführungsform der in Figur 3A gezeigten. Durch die veränderte Form des Trogs kommt es ebenfalls zu veränderten Formen bei den Durchbruchsöffnungen.

Figur 3D schließlich zeigt eine Ausführungsform der vorliegenden Erfindung, bei der jeder Trog 21 nur eine Durchbruchsöffnung 17 aufweist. Dies wird dadurch erreicht, daß der Trog 21 seitlich versetzt unter der Rippe 14 angeordnet ist. Die Rippe 14 weist eine ausgeprägte Flanke auf, die in einen senkrechten Bereich übergeht und den Übergangsbereich 18 bildet. Bei dieser Ausführungsform ist es möglich, Tröge von einem Durchmesser zu verwenden, der kleiner ist als die Rippenbreite, und dennoch eine Durchbruchsöffnung zu erhalten. Auf diese Weise läßt sich die Fläche der Durchbruchsöffnung nochmals verkleinern.

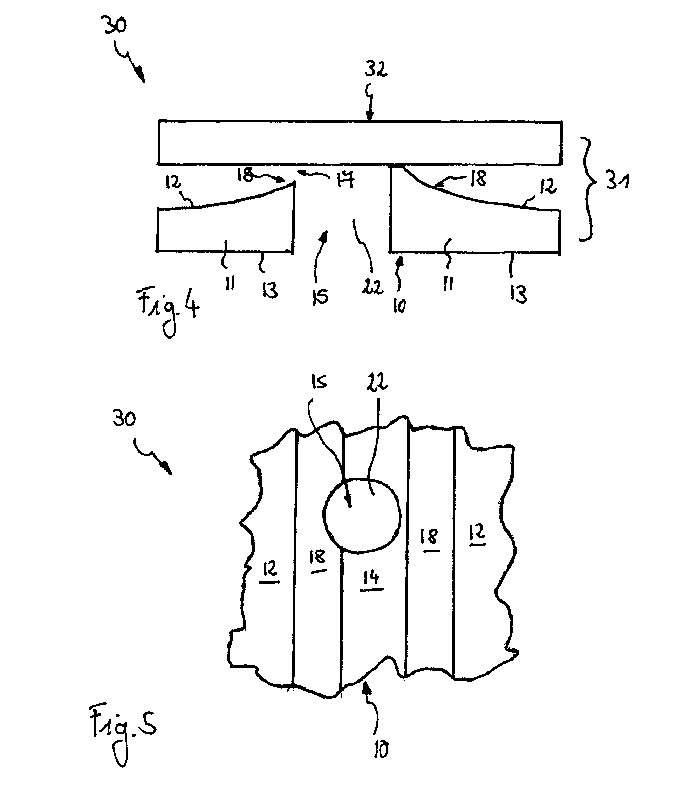

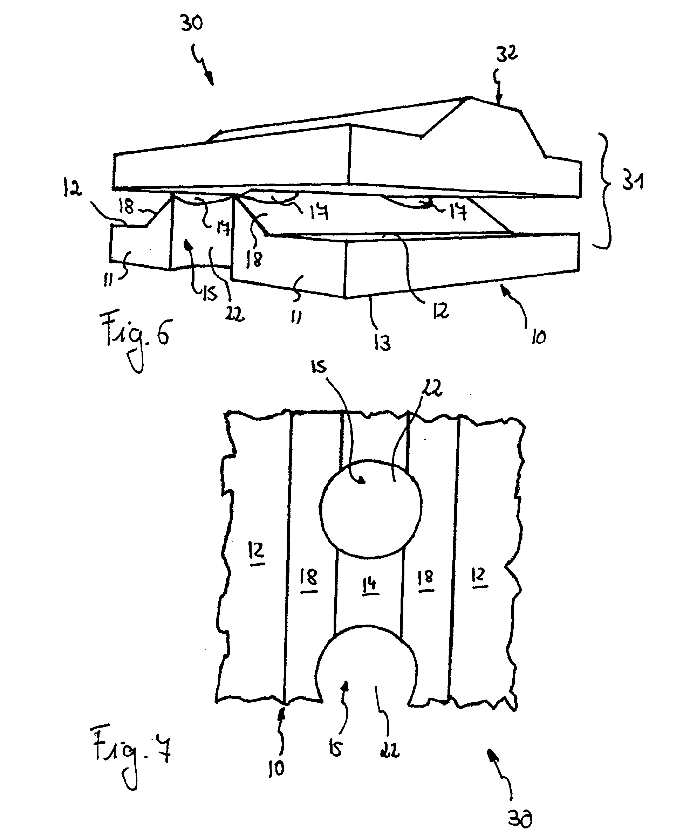

In den Figuren 4 und 5 ist ein Reaktor 30 dargestellt, der aus einer Schichtfolge 31 mehrerer Platten gebildet ist. Ein erster Plattentyp bildet eine beliebig ausgebildete Platte 32, während ein anderer Plattentyp durch die Lochplatte 10 gebildet wird. Die Abfolge und Anzahl der Platten 32, 10 sowie die Ausgestaltung der Platten 32 kann je nach Anwendungsfall und Einsatzgebiet des Reaktors 30 variieren.

Figur 4 zeigt eine Seitenansicht des Reaktors 30, während in Figur 5 eine Draufsicht auf einen Ausschnitt aus der Lochplatte 10 dargestellt ist.

Die Lochplatte 10 weist wiederum Rippen 14 mit entsprechenden Übergangsbereichen 18 auf. Der Grundaufbau der Lochplatte 10 entspricht grundsätzlich dem Aufbau der in den Figuren 1 bis 3 dargestellten Lochplatten, so daß gleiche Bauteile mit identischen Bezugsziffern versehen wird und bezüglich des Grundaufbaus auf die Ausführungen zu den Figuren 1 bis 3 verwiesen wird.

Im Gegensatz zu den Figuren 1 bis 3 sind bei der Lochplatte 10 gemäß den Figuren 4 und 5 Löcher 15 vorgesehen, die als durchgehende Öffnungen 22 ausgebildet sind, die sich durch den Plattenbereich 11, einen Teilbereich der Rippe 14 sowie einen Teilbereich des Übergangsbereichs 18 hindurch erstrecken. Im vorliegenden Beispiel erstrecken sich die Löcher 15 nur durch einen der beiden Übergangsbereiche 18, der in diesem Fall als Seitenwand der Rippe 14 ausgebildet ist.

Das Loch 15 ist mit mehr als 20% seiner Querschnittsfläche gegenüber der Rippe 14 und gegenüber dem Übergangsbereich 18 angeordnet.

Die im Vergleich zum Lochquerschnitt kleineren Durchbruchsöffnungen 17 werden dadurch realisiert, daß die Lochplatte 10 mit der darüber liegenden Platte 32 verbunden ist, so daß ein die Löcher 15 durchströmendes Medium nur zu den Seiten der Rippe 14 austreten kann.

In den Figuren 6 und 7 ist schließlich ein Reaktor 30 dargestellt, der ähnlich wie der Reaktor 30 aus den Figuren 4 und 5 aufgebaut ist. Figur 6 zeigt eine perspektivische Ansicht eines Ausschnitts des Reaktors 30, während in Figur 7 eine Draufsicht auf einen Ausschnitt aus der Lochplatte 10 dargestellt ist.

Im Unterschied zu dem Reaktor gemäß Figuren 4 und 5 weist der in den Figuren 6 und 7 dargestellte Reaktor 30 jedoch Löcher 15 in Form durchgehender Öffnungen 22 auf, die sich nicht nur durch wenigstens einen Teilbereich der Rippe 14 hindurch erstrecken. Die Löcher 15 erstrecken sich über die gesamte Breite der Rippe 14. Darüber hinaus erstrecken sich die Löcher 15 jeweils durch einen Teilbereich beider Übergangsbereiche 18 von Rippe 14 zur ersten Hauptoberfläche 12.

### Bezugszeichenliste

- 10: Lochplatte
- 11: Plattenbereich
- 12: Erste Hauptoberfläche
- 13: Zweite Hauptoberfläche
- 14: Rippe
- 15: Loch
- 16: Tiefe des Lochs
- 17: Durchbruchsöffnung
- 18: Übergangsbereich
- 19: Seitenwand, Flanke
- 20: Lochöffnung
- 21: Trog
- 22: durchgehende Öffnung

- 30: Reaktor
- 31: Schichtfolge
- 32: Platte

## Patentansprüche

1. Lochplatte (10), aufweisend einen Plattenbereich (11), zumindest eine auf einer ersten Hauptoberfläche (12) des Plattenbereichs (11) angeordnete Rippe (14) und wenigstens einen Übergangsbereich (18) zwischen Rippe (14) und erster Hauptoberfläche (12), wobei wenigstens ein von einer zweiten Hauptoberfläche (13) des Plattenbereichs (11) ausgehendes Loch (15) vorgesehen ist,
**dadurch gekennzeichnet,**
**daß** das Loch (15) mit mehr als 20% seiner Querschnittsfläche gegenüber der zumindest einen Rippe (14) und/oder gegenüber zumindest einem Übergangsbereich (18) angeordnet ist und
**daß** das Loch (15) derart ausgebildet ist, daß zumindest eine Durchbruchöffnung (17) in wenigstens einem Übergangsbereich (18) ausgebildet ist.

2. Lochplatte (10) nach Anspruch 1, **dadurch gekennzeichnet, daß** das wenigstens eine Loch (15) als Trog (21) ausgebildet ist, dessen Tiefe geringer ist als die Gesamtdicke des Plattenbereichs (11) einschließlich der mindestens einen Rippe (14).

3. Lochplatte (10) nach Anspruch 1, **dadurch gekennzeichnet, daß** das Loch (15) als durchgehende Öffnung (22) ausgebildet ist, die sich durch den Plattenbereich (11) sowie wenigstens einen Teilbereich der Rippe (14) hindurch erstreckt und daß sich die durchgehende Öffnung (22) weiterhin durch wenigstens einen Teilbereich von zumindest einer Seitenwand (19) der Rippe (14) hindurch erstreckt.

4. Lochplatte (10) nach einem der Ansprüche 1 bis 3, **dadurch gekennzeichnet, daß** sich wenigstens ein Loch (15) in einer zum Plattenbereich (11) senkrechten Richtung erstreckt.

5. Lochplatte (10) nach einem der Ansprüche 1 bis 3, **dadurch gekennzeichnet, daß** sich wenigstens ein Loch (15) bezüglich des Plattenbereichs (11) in einem von der Senkrechten abweichenden Winkel erstreckt.

6. Lochplatte (10) nach einem der Ansprüche 1 bis 5, **dadurch gekennzeichnet, daß** die wenigstens eine Rippe (14) zwei Seitenwände (19) aufweist und daß auf beiden Seitenwänden (19) der zumindest einen Rippe (14) Durchbruchsöffnungen (17) vorhanden sind.

7. Lochplatte (10) nach einem der Ansprüche 1 bis 6, **dadurch gekennzeichnet, daß** die zumindest eine Rippe (14) einen rechteckigen Querschnitt aufweist, oder daß der Übergangsbereich (18) von der zumindest einen Rippe (14) und erster Hauptoberfläche (12) gerundet ist.

8. Lochplatte (10) nach einem der Ansprüche 1 bis 7, **gekennzeichnet durch** zwei oder mehr auf der ersten Hauptoberfläche (12) des Plattenbereichs (11) angeordnete Rippen (14).

9. Lochplatte (10) nach einem der Ansprüche 1 bis 8, **dadurch gekennzeichnet, daß** das zumindest eine Loch (15) einen kreisförmigen oder viereckigen Umfang aufweist.

10. Lochplatte (10) nach einem der Ansprüche 2 bis 9, **dadurch gekennzeichnet, daß** der zumindest eine Trog (15) einen Boden aufweist, der gegen die Rippe (14) hin aufgewölbt ist.

11. Lochplatte (10) nach einem der Ansprüche 1 bis 10, **dadurch gekennzeichnet, daß** der größte Durchmesser der Durchbruchsöffnungen (17) 10 bis 100 Mikrometer beträgt.

12. Lochplatte (10) nach einem der Ansprüche 1 bis 11, **dadurch gekennzeichnet, daß** die zumindest eine Rippe (14) und/oder das zumindest eine Loch (15) in Mikrostrukturtechnik hergestellt sind.

13. Lochplatte (10) nach einem der Ansprüche 1 bis 12, **dadurch gekennzeichnet, daß** die Oberfläche der Lochplatte (10) zumindest bereichsweise mit einem Katalysatormaterial beschichtet ist, oder daß die Lochplatte (10) zumindest teilweise aus einem katalytisch aktiven Werkstoff hergestellt ist.

14. Reaktor (30), aufweisend ein Schichtfolge (31) von zwei oder mehr Platten,
**dadurch gekennzeichnet,**
**daß** wenigstens eine der Platten als Lochplatte (10) nach einem der Ansprüche 1 bis 13 ausgebildet ist.

15. Reaktor nach Anspruch 14, **dadurch gekennzeichnet, daß** die wenigstens eine Lochplatte (10) in Mikrostrukturtechnik ausgebildet ist.

16. Verfahren zur Herstellung von Lochplatten (10), **gekennzeichnet durch** folgende Schritte:
- Bereitstellen einer Platte mit einem Plattenbereich (11), zumindest einer auf einer ersten Hauptoberfläche (12) des Plattenbereichs (11) angeordneten Rippe (14) und wenigstens einem Übergangsbereich (18) zwischen Rippe (14) und erster Hauptoberfläche (12)
- Einbringen wenigstens eines Lochs (15) in die Platte, derart, daß das Loch (15) mit mehr als 20% seiner Querschnittsfläche gegenüber der zumindest einen Rippe (14) und/oder gegenüber zumindest einem Übergangsbereich (18) angeordnet ist, wobei das Loch (15) in einer Weise ausgebildet wird, daß zumindest eine Durchbruchöffnung (17) in wenigstens einem Übergangsbereich (18) ausgebildet wird.

17. Verfahren nach Anspruch 16, **dadurch gekennzeichnet, daß** das Bereitstellen den folgenden Schritt aufweist:
- Anordnen zumindest einer Rippe (14) auf einer ersten Hauptoberfläche (12) eines Plattenbereichs (11) der Platte.

18. Verfahren nach Anspruch 17, **dadurch gekennzeichnet, daß** das Anordnen der zumindest einen Rippe (14) durch Anordnen eines Rippenelements auf die erste Hauptoberfläche (12) erfolgt.

19. Verfahren nach Anspruch 17 oder 18, **dadurch gekennzeichnet, daß** das Anordnen der zumindest einen Rippe (14) durch Mikrostrukturtechnik erfolgt.

20. Verfahren nach einem der Ansprüche 16 bis 19, **dadurch gekennzeichnet, daß** das Einbringen des zumindest einen Lochs (15) durch Ätzen und/oder Sputtern und/oder Bohren erfolgt.

21. Verfahren nach einem der Ansprüche 16 bis 20, **dadurch gekennzeichnet, daß** das Anordnen der zumindest einen Rippe (14) und das Einbringen des zumindest einen Lochs (15) im selben Schritt erfolgen.

22. Verfahren nach einem der Ansprüche 16 bis 21, **dadurch gekennzeichnet, daß** damit eine Lochplatte (10) nach einem der Ansprüche 1 bis 13 hergestellt wird.

## Claims

1. Perforated plate (10), comprising a plate region (11), at least one rib (14) disposed on a first main surface (12) of the plate region (11) and at least one transitional region (18) between the rib (14) and first main surface (12), wherein at least one hole (15) is provided which starts from a second main surface (13) of the plate region (11), **characterised in that** the hole (15) is arranged with more than 20% of its cross-sectional area opposite the minimum of one rib (14) and/or opposite at least one transitional region (18) and the hole (15) is designed so that at least one through-opening (17) is formed in at least one transitional region (18).

2. Perforated plate (10) according to claim 1, **characterised in that** the minimum of one hole (15) is formed as a trough (21) the depth of which is less than the total thickness of the plate region (11) including the minimum of one rib (14).

3. Perforated plate (10) according to claim 1, **characterised in that** the hole (15) is designed as a penetrating opening (22) which extends through the plate region (11) and at least one partial area of the rib (14) and **in that** the penetrating opening (22) also extends through at least one partial area of at least one side wall (19) of the rib (14).

4. Perforated plate (10) according to one of claims 1 to 3, **characterised in that** at least one hole (15) extends in a direction perpendicular to the plate region (11).

5. Perforated plate (10) according to one of claims 1 to 3, **characterised in that** at least one hole (15) extends at an angle diverging from the perpendicular with respect to the plate region (11).

6. Perforated plate (10) according to one of claims 1 to 5, **characterised in that** the minimum of one rib (14) has two side walls (19) and through-openings (17) are provided on both side walls (19) of the minimum of one rib (14).

7. Perforated plate (10) according to one of claims 1 to 6, **characterised in that** the minimum of one rib (14) has a rectangular cross section, or **in that** the transitional region (18) of the minimum of one rib (14) and first main surface (12) is rounded.

8. Perforated plate (10) according to one of claims 1 to 7, **characterised by** two or more ribs (14) disposed on the first main surface (12) of the plate region (11).

9. Perforated plate (10) according to one of claims 1 to 8, **characterised in that** the minimum of one hole (15) has a circular or rectangular contour.

10. Perforated plate (10) according to one of claims 2 to 9, **characterised in that** the minimum of one trough (15) has a base which is domed towards the rib (14).

11. Perforated plate (10) according to one of claims 1 to 10, **characterised in that** the maximum diameter of the through-openings (17) is 10 to 100 microns.

12. Perforated plate (10) according to one of claims 1 to 11, **characterised in that** the minimum of one rib (14) and/or the minimum of one hole (15) is or are produced by microengineering.

13. Perforated plate (10) according to one of claims 1 to 12, **characterised in that** the surface of the perforated plate (10) is coated, at least in parts, with a catalyst material, or **in that** the perforated plate (10) is at least partly produced from a catalytically active material.

14. Reactor (30) comprising a layered sequence (31) of two or more plates, **characterised in that** at least one of the plates is constructed as a perforated plate (10) according to one of claims 1 to 13.

15. Reactor according to claim 14, **characterised in that** the minimum of one perforated plate (10) is produced by microengineering.

16. Method of producing perforated plates (10), **characterised by** the following steps:
- preparing a plate having a plate region (11), at least one rib (14) disposed on a first main surface (12) of the plate region (11) and at least one transitional region (18) between the rib (14) and first main surface (12),
- forming at least one hole (15) in the plate, such that the hole (15) is arranged with more than 20% of its cross-sectional area opposite the minimum of one rib (14) and/or opposite at least one transitional region (18), the hole (15) being designed so that at least one through-opening (17) is formed in at least one transitional region (18).

17. Method according to claim 16, **characterised in that** the preparation comprises the following step:
- providing at least one rib (14) on a first main surface (12) of a plate region (11) of the plate.

18. Method according to claim 17, **characterised in that** the provision of the minimum of one rib (14) is effected by providing a rib element on the first main surface (12).

19. Method according to claim 17 or 18, **characterised in that** the provision of the minimum of one rib (14) is effected by microengineering.

20. Method according to one of claims 16 to 19, **characterised in that** the provision of the minimum of one hole (15) is effected by etching and/or sputtering and/or drilling.

21. Method according to one of claims 16 to 20, **characterised in that** the provision of the minimum of one rib (14) and the forming of the minimum of one hole (15) are carried out in the same step.

22. Method according to one of claims 16 to 21, **characterised in that** a perforated plate (10) according to one of claims 1 to 13 is produced thereby.

## Revendications

1. Plaque à orifice (10) comportant une zone de plaques (11), au moins une nervure (14) disposée sur une première surface principale (12) de la zone de plaques (11) et au moins une zone de transition (18) entre des nervures (14) et une première surface (12) sachant qu'au moins un orifice (15) sortant d'une deuxième surface principale (13) de la zone de plaques (11) est prévu,
**caractérisée en ce que**,
l'orifice (15) est disposé avec plus de 20% de sa surface de section transversale par rapport au moins à une nervure (14) et/ou par rapport au moins à une zone de transition (18).et
**en ce que** l'orifice (15) est configuré de telle manière qu'au moins une ouverture de passage (17) est configurée dans au moins une zone de transition (18).

2. Plaque à orifices (10) selon la revendication 1, **caractérisée en ce qu'**au moins un orifice (15) est configuré comme une auge (21), dont la profondeur est inférieure à l'épaisseur totale de la zone de plaques (11) y compris au moins une rainure (14).

3. Plaque à orifices (10) selon la revendication 1, **caractérisée en ce que** l'orifice (15) est configuré comme une ouverture continue (22), qui s'étend à travers la zone de plaques (11) ainsi qu'à travers au moins une zone partielle de la nervure (14) et **en ce que** l'ouverture continue (22) s'étire en outre à travers au moins une zone partielle d'au moins une paroi latérale (19) de la nervure (14).

4. Plaque à orifices (10) selon l'une quelconque des revendications 1 à 3, **caractérisée en ce qu'**au moins un orifice (15) s'étend dans une direction perpendiculaire à la zone de plaques (11).

5. Plaque à orifices (10) selon l'une quelconque des revendications 1 à 3, **caractérisée en ce qu'**au moins un orifice (15) s'étend par rapport à la zone de plaques (11) dans un angle différent de la perpendiculaire.

6. Plaque à orifices (10) selon l'une quelconque des revendications 1 à 5, **caractérisée en ce qu'**au moins une nervure (14) comporte deux parois latérales (19) et **en ce que** des ouvertures de passage se trouvent sur les deux parois latérales (19) d'au moins une nervure (14).

7. Plaque à orifices (10) selon l'une quelconque des revendications 1 à 6, **caractérisée en ce qu'**au moins une nervure (14) comporte une section transversale rectangulaire ou **en ce que** la zone de transition (18) est entourée d'au moins une nervure (14) et de la première surface principale (12).

8. Plaque à orifices (10) selon l'une quelconque des revendications 1 à 7, **caractérisée par** deux nervures ou plus (14) disposées sur la surface principale (12) de la zone de plaques (11).

9. Plaque à orifices (10) selon l'une quelconque des revendications 1 à 8, **caractérisée en ce qu'**au moins un orifice (15) présente un périmètre circulaire ou rectangulaire.

10. Plaque à orifices (10) selon l'une quelconque des revendications 2 à 9, **caractérisée en ce qu'**au moins une auge (15) comporte un fond, qui est cintré vers l'intérieur contre la nervure (14).

11. Plaque à orifices (10) selon l'une quelconque des revendications 1 à 10, **caractérisée en ce que** le diamètre le plus grand des ouvertures de passage (17) mesure entre 10 et 100 micromètres.

12. Plaque à orifices (10) selon l'une quelconque des revendications 1 à 11, **caractérisée en ce qu'**au moins une nervure (14) et/ou au moins un orifice (15) sont fabriqués selon une technique de microstructure.

13. Plaque à orifices (101) selon l'une quelconque des revendications 1 à 12, **caractérisée en ce que** la surface de la plaque à orifices (10) est revêtue au moins par zone d'un matériau catalytique ou en ce que la plaque à orifices (10) est fabriquée au moins partiellement dans une matière plastique catalytique active.

14. Réacteur (30) comportant une suite de couches (31) de deux plaques ou plus,
**caractérisé en ce**
**qu'**au moins une des plaques est configurée comme plaque à orifice () selon l'une quelconque des revendications 1 à 13.

15. Réacteur selon la revendication 14, **caractérisé en ce qu'**au moins une plaque à orifices (10) est configurée dans une technique de microstructure.

16. Procédé de fabrication de plaques à orifices (10) **caractérisé par** les étapes suivantes :
- mise à disposition d'une plaque avec une zone de plaques (11), au moins une nervure (14) disposée sur une première surface principale (12) de la zone de plaques (11) et au moins une zone de transition (18) entre nervure (14) et première surface principale (12)
- mise en place d'au moins un orifice (15) dans la plaque, de telle manière que l'orifice (15) est disposé avec plus de 20% de sa surface de section transversale par rapport à au moins une nervure (14) et/ou par rapport à au moins une zone de transition (18), sachant que l'orifice (15) est configuré de telle manière qu'au moins une ouverture de passage (17) est configurée au moins dans une zone de transition (18).

17. Procédé selon la revendication 16, **caractérisé en ce que** la mise à disposition comporte la phase suivante :
- agencement d'au moins une nervure (14) sur une première surface principale (12) d'une zone de plaques (11) de la plaque.

18. Procédé selon la revendication 17, **caractérisé en ce que** l'agencement d'au moins une nervure (14) résulte de l'agencement d'un élément de nervure sur la première surface principale (12).

19. Procédé selon la revendication 17 ou 18, **caractérisé en ce que** l'agencement d'au moins une nervure (14) résulte d'une technique de microstructure.

20. Procédé selon l'une quelconque des revendications 16 à 19, **caractérisé en ce que** la mise en place d'au moins un orifice (15) s'effectue par décapage et/ou pulvérisation et/ou forage

21. Procédé selon l'une quelconque des revendications 16 à 20, **caractérisé en ce que** l'agencement d'au moins une nervure (14) et la mise en place d'au moins un orifice (15) s'effectuent dans la même étape.

22. Procédé selon l'une quelconque des revendications 16 à 21, **caractérisé en ce que** de cette manière une plaque à orifices (101) est fabriquée selon l'une quelconque des revendications 1 à 13.
